# EUROPEAN PATENT APPLICATION

(11) **EP 3 199 801 A1**
(43) Date of publication of application: **02.08.2017**
(21) Application number: 17153759.0
(22) Date of filing: 30.01.2017
(51) Int. Cl.: F03D 1/04

(54) **WIND TURBINE AND METHOD OF GENERATING POWER FROM WIND**

(30) Priority: 28.01.2016 NL 2016181
(71) Applicant: Insidiamini Group B.V., 7701 SJ Dedemsvaart (NL)
(72) Inventor: Bijl, Jakob Koop, 7701 SJ Dedemsvaart (NL)
(74) Representative: V.O.

(57) **Abstract**

A wind turbine has a propeller rotatable about an axis of rotation and having a plurality of airfoil blades circumferentially distributed about the axis of rotation. The blades are shaped for driving rotation of the propeller in a circumferential sense about the axis of rotation in response to airstream having a directional component in a direction parallel to the axis of rotation. The wind turbine further has a generator structure for generating electric power in response to the rotation of the propeller and a rotation inducer upstream of the propeller for inducing a rotation in the airstream from the rotation inducer to the propeller. The rotation inducer is adjustable for adjusting rotation imparted onto the airstream in accordance with at least rotational velocity of the propeller, velocity of the airstream or amount of electric power generated by the generator structure. A method using such a turbine is also disclosed.

## Description

### FIELD AND BACKGROUND OF THE INVENTION

The invention relates to a wind turbine and to a method of generating power from wind.

Wind energy or wind power is extracted from air flow, mostly using wind turbines, also known as airfoil-powered generators. Wind power is very consistent from year to year but has significant variations over shorter time scales. One approach is to couple large wind parks into electrical power grids, so that, in conjunction with other electric power sources, a reliable power supply can be ensured. However, the presence of a varying source has a negative effect on the efficiency and economy of costs of other sources and the network, which have to accommodate to the varying contribution and regional distribution of the wind power supply. Moreover, large wind parks are often regarded as having a negative impact on the quality of life by nearby residents and the visual quality of the landscape.

Therefore, small scale use of wind energy constitutes an interesting option for harvesting wind power, with relatively little impact on members of the public not involved therein. However, when generating power from wind locally, the variation in the yield of the wind power supply constitutes an even more serious problem. In particular the span of time during which a minimum supply of power, which is needed to power functions that are preferably not switched off temporarily during periods of limited power supply, and that would therefore have to be powered from other sources, should be kept as small as possible. In small scale applications, this is more important than maximum yield during periods of stronger wind.

### SUMMARY OF THE INVENTION

It is an object of the present invention to provide a simple solution that allows a particularly effective yield when generating wind power during calm periods, while allowing extraction of wind power even in very strong wind, so that a particularly reliable supply of wind energy is achieved.

According to the invention, this object is achieved by providing a wind turbine according to claim 1. The invention can also be embodied in a method according to claim 12.

Because the rotation inducer is adjustable for adjusting how much rotation is imparted onto the air stream in accordance with at least rotational velocity of the propeller, velocity of the airstream or amount of electric power generated by the generator structure, the apparent angle of attack of the airstream relative to the plane in which the rotor rotates, as encountered by the rotating airfoil blades, can be adjusted to the velocity of the blades in relation to the velocity of the wind. This allows the angle of attack to be influenced to better match the angle and shape of the airfoil blades over a wide range of wind speeds. Also, the angle of attack can be adjusted to achieve a less efficient power transfer, so that the wind turbine can also be operated in very strong winds, without causing damage to the wind turbine due excessive rotational velocity of the propeller or overheating due to generation of too much electrical power.

A particular advantage of using a stationary rotation inducer is that improved efficiency over a wide wind speed range as well as wind power generation over an increased wind speed range can be achieved without having to resort to airfoil blades of the rotatable propeller that are adjustable for varying pitch. Thus, the need of a complicated construction, which particularly disadvantageous for small scale wind turbines, is avoided.

Furthermore, due to the rotation about the propeller axis imparted onto the air stream, sensitivity to mismatches between the wind direction and the orientation of the propeller axis is reduced. Thus, requirements to velocity and accuracy of yaw control are reduced, which is particularly advantageous for reducing the cost of construction, because quick changes of the orientation of the propeller axis require exertion of substantial forces because of the gyroscopic effect of the rotating propeller.

Particular elaborations and embodiments of the invention are set forth in the dependent claims.

Further features, effects and details of the invention appear from the detailed description and the drawings.

### BRIEF DESCRIPTION OF THE DRAWINGS

Fig. 1 is a perspective view of an example of a wind turbine according to the invention;
Fig. 2 is a front view of the wind turbine shown in Fig. 1;
Fig. 3 is a side view of the wind turbine shown in Figs. 1 and 2;
Fig. 4 is a rear view of the wind turbine shown in Figs. 1-3;
Fig. 5 is a cross-sectional view along the line V-V in Fig. 2;
Fig. 6 is an isometric view of a radially central portion of the wind turbine as shown in Figs. 1-5; and
Fig. 7a-7c are a schematic cross-sectional views along a cylindrical plane VII-VII in Fig. 2, said plane having a curvature coaxial with a central axis of rotation of the wind turbine, in different operating conditions.

### DETAILED DESCRIPTION

An example of a wind turbine according to the invention and its method of operation are described with reference to the drawings.

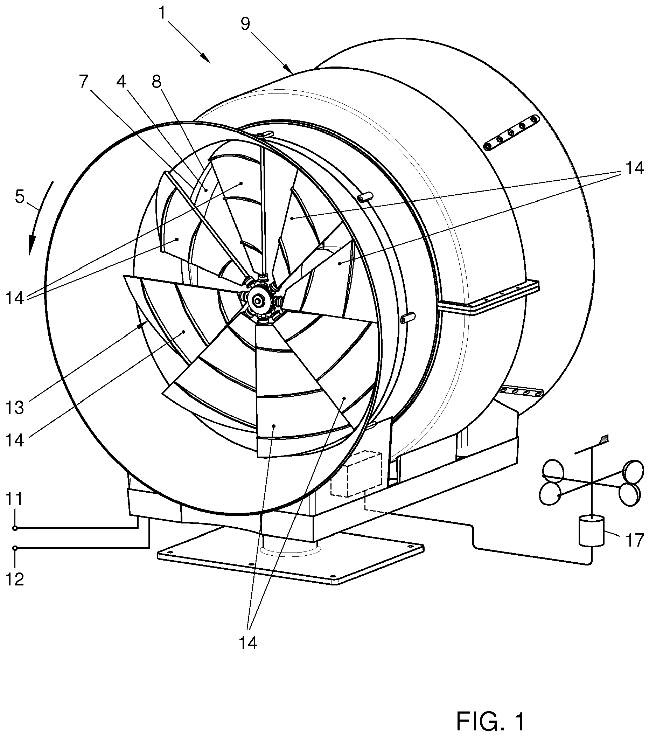

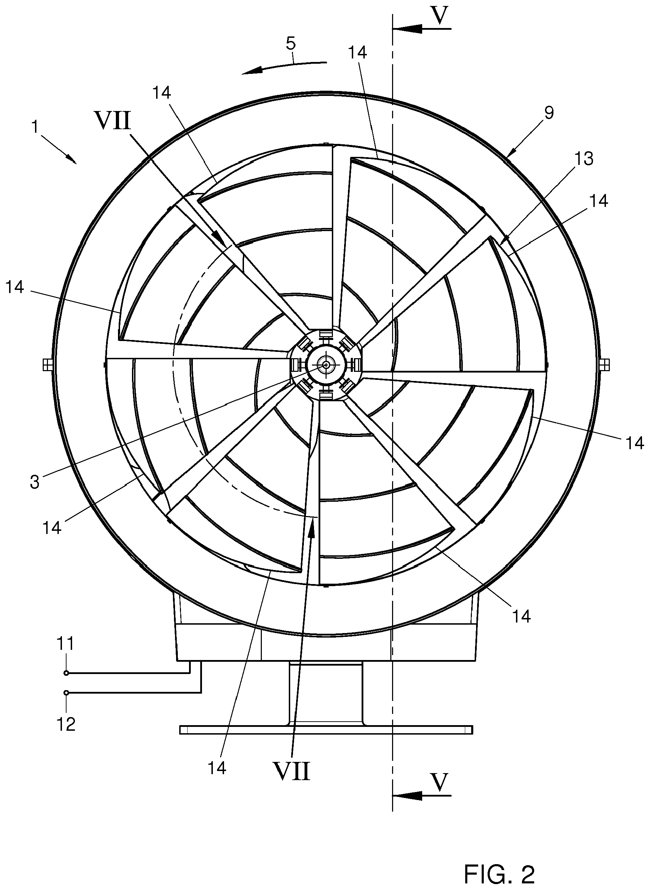

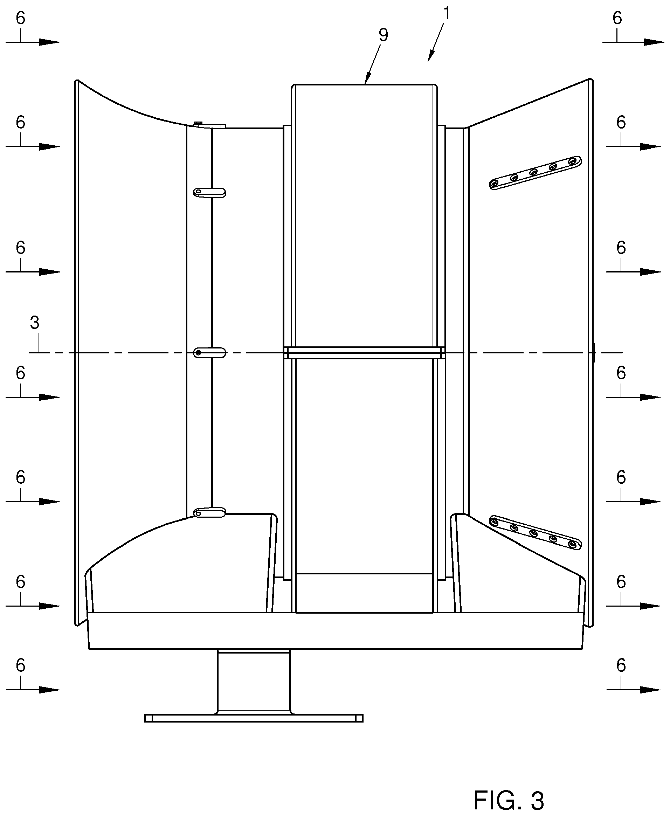

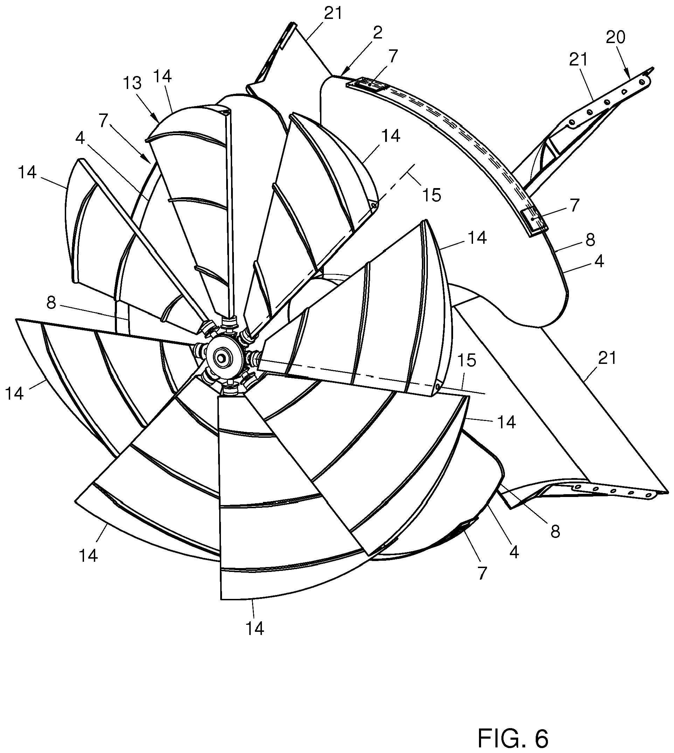

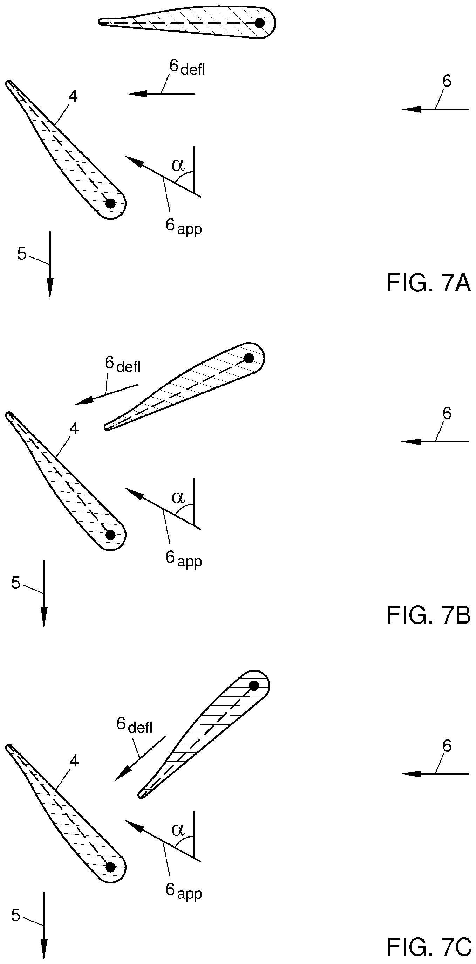

In Figs. 1-5, an example of a wind turbine 1 according to the invention is shown. In Figs. 6 and 7a-7c parts of the wind turbine according to Figs. 1-5 are shown.

The wind turbine 1 has a propeller 2 rotatable about an axis of rotation 3. The propeller 2 has a plurality of airfoil blades 4 that are circumferentially distributed about the axis of rotation 3. The blades 4 are shaped for driving rotation of the propeller 3 in a circumferential sense 5 about the axis of rotation 3 in response to airstream 6 having a directional component in a direction parallel to the axis of rotation 3. In the present example, the airfoil blades 4 are shaped with outer surfaces extending along generally helical path sections having the axis of rotation 3 as a center line and otherwise shaped in accordance with known principles of propeller blade design for optimizing a ratio between drag and thrust as a result of the airstream 6.

Furthermore, the wind turbine has a generator structure for generating electric power in response to the rotation of the propeller 2. In this example, the generator structure consists of a rotor in the form of the propeller 2 which is equipped with magnetic members 7 on outer ends 8 of the blades 4 and a stator in the form of a sleeve 9 extending around the propeller 2 and coaxial with the axis of rotation 3 and provided with coils 10 in stationary positions just radially outside of the magnetic members 7 so that a current is induced in the coils 10 when the magnetic members 7 on the rotating propeller blades 4 pass closely along the coils 10. The coils 10 are connected to output contacts 11, 12 such that a current and voltage is obtained at the output contacts. The current may be an alternating or direct current.

Upstream of the propeller 2 a rotation inducer 13 for inducing a rotation in the airstream 6 from the rotation inducer 13 to the propeller 2 is arranged. The rotation inducer 13 is adjustable for adjusting rotation imparted onto the airstream 6 in accordance with at least rotational velocity of the propeller 2, velocity of the airstream 6 or amount of electric power generated by the generator structure 7, 10.

In the present example, the rotation inducer has a plurality of airstream deflector blades 14 circumferentially distributed about the axis of rotation 3 and stationary in circumferential sense about the axis of rotation 3.

As is best seen in fig. 7, the rotation inducer 13 imparts rotation in circumferential sense 5 to wind arriving at the rotation inducer 13 in the form of an airstream 6. The airstream 6 in deflected in rotational sense 5 to for instance an average direction 6_{defl}. Because the airfoil blades 4 of the propeller 2 move in the rotational sense 5 as well, the apparent direction of the flow encountering the airfoil blades 4 is more from ahead in the sense of rotation 5, for instance in a direction 6ₐₚₚ as indicated in Fig. 7. The angle between the deflected direction 6_{defl} and the apparent direction increases with the ratio between the speed of the airfoil blades 4 and the deflected airstream 6_{defl}. However, there is always an optimal angle of attack α, which is here defined as angle between the apparent airstream 6ₐₚₚ as encountered by the moving airfoil blades 4 relative to the sense of rotation 5 of the airfoil blades 4. This angle of attack α depends on the design of the airfoil blades 4 and may vary with the velocity of the airflow 6 and accordingly of the deflected airflow 6_{defl} and the apparent airflow 6ₐₚₚ.

In a condition of no airstream 6 (i.e. no wind) the propeller 2 is stationary. If the wind picks up to for instance a wind velocity that is just enough to generate some power, the airstream 6 is slow and the propeller 2 will first have to be set in motion from standstill. A relatively small angle of attack α allows achieving this already at a very slow wind speed, because the airflow will follow a leeward side of the airflow blade 4 over a larger distance and accordingly create more suction having a component in the circumferential sense 5. Therefore, the deflector blade 14 is then held in a position parallel to the direction of airstream 6 and the direction of the airflow 6_{defl} downstream of the deflector blades 14 is the same as the direction of the airstream 6 upstream of deflector blades 14. In some cases it may even met advantageous to deflect the air stream in a direction contrary to the sense of rotation 5 for initially causing the propeller 2 to start rotating from standstill.

Once the propeller 2 has started rotating in the slow airstream 6 where there is little wind and is subjected to a load associated with the generation of electric power, a generally constant equilibrium velocity is reached. This operating condition is depicted in Fig. 7a. The deflector blade 14 is still held in a position parallel to the direction of airstream 6, so that the airflow 6_{defl} downstream of the deflector blades 14 is still in the same direction as the airstream 6 upstream of the deflector blades 14. However, because the airfoil blades 4 are moving in the circumferential sense 5, a directional component opposite to the circumferential sense 5 is added to de airflow 6_{defl} downstream of the deflector blades 14, so that the overall direction of the apparent airflow 6ₐₚₚ to which the airfoil blades 4 are exposed reaches the moving airfoil blades 4 from a direction that is more forward in the sense of rotation 5, i.e. more contrary to the sense of rotation 5.

When the wind speed increases, the circumferential speed of the airfoil blades 4 increases more than proportionally with the speed of the airstream 6. Thus, the ratio between the speed of the airfoil blades 4 and the speed of the airflow 6_{defl} downstream of the deflector blades 14 becomes greater so the angle of attack α at which the apparent airflow 6ₐₚₚ reaches the airflow blades 4 would turn further in a direction contrary to the sense of rotation 5. To counteract this effect to at least some extent, the deflector blades 14 are pivoted so that trailing ends thereof are oriented more in de sense of rotation 5, as is shown in Fig. 7b. Thus, the airstream 6_{defl} is deflected in the sense of rotation 5. This does at least partially compensate for the increased ratio between the velocity of the airfoil blades 4 and the velocity of the airflow 6_{defl} downstream of the deflector blades 14, so that the angle of attack α at which the apparent airflow 6ₐₚₚ reaches the airflow blades 4 is maintained substantially constant. It is also possible to cause the angle of attack α to vary with the wind velocity to accommodate to variation of the optimal angle of attack with air stream velocity.

As is shown in Fig. 7c, the same principle is applied to a further degree if the wind velocity increases even further. The further increased deflection of the airflow 6_{defl} downstream of the deflector blades 14 compensates for the further increased ratio between the velocity of the airfoil blades 4 in circumferential sense 5 and the velocity of the airflow 6_{defl} downstream of the deflector blades 14, so that the angle of attack α at which the apparent airflow 6ₐₚₚ reaches the airflow blades 4 is still maintained substantially constant or can be adjusted to a value that is optimal at the given apparent airflow velocity.

Adjustment of the angle over which the airstream 6 is deflected also allows to change the angle of attack to a value that is far from optimal for transferring energy to the airfoil blades 4. If the wind is so strong that operating the wind turbine would otherwise result in too high propeller speeds and/or generation of too much current (e.g. wind speed higher than about 20 m/s), the angle of attack can be chosen such that the efficiency of energy transfer from the airflow 6ₐₚₚ to the propeller 2 is reduced or the maximum velocity of the propeller is reduced. In this way, damage to the turbine 1 during stormy weather can be counteracted.

Thus, because the rotation inducer 13 is adjustable for adjusting to what extent rotation is imparted onto the air stream 6 in accordance with at least rotational velocity of the propeller 2, velocity of the airstream 6 or amount of electric power generated by the generator structure 7, 10, the apparent angle of attack α at which the apparent airflow 6ₐₚₚ reaches the airflow blades 4 relative to the plane in which the propeller rotates, as encountered by the rotating airfoil blades, can be adjusted to the velocity of the blades in relation to the velocity of the wind. This allows the angle of attack to be influenced to better match the angle and shape of the airfoil blades over a wide range of wind speeds and to allow operation in very strong winds, without suffering damage. Accordingly, variations in the amount of wind power that is generated and operation over a wider range of wind speeds is achieved in a relatively simple wind turbine that is suitable for small scale generation of electric power.

In the present example, adjustment of the amount of deflection of the airstream is allowed in a simple manner by providing that each of the airstream deflector blades 14 is pivotable about an axis 15 transverse to the axis of rotation 3 (see Fig. 6). This is achieved by stepper motors in the sleeve 9 at outer ends of the deflector blades 14.

Because the rotation inducer 13 is arranged for inducing rotation of the airstream in the sense of rotation 5 of the propeller 2, the airfoil blades 4 of the propeller 2 can be optimized for generating lift in a direction at a smaller angle relative to the sense of rotation than would be possible if the airstream is parallel to the axis of rotation 3. Thus, the lift generates a greater torque about the axis of rotation 3.

As is shown in Fig. 1, the wind turbine has a control unit 16 is connected to a device 17 for measuring wind speed and wind direction 17. The rotation inducer 13 is controlled by the control unit 16 such that the deflection of the airstream 6 in the sense of rotation 5 of the propeller 2 is changed in response to increasing velocity of the air stream measured by the wind speed meter and vice versa. This allows the rotation inducer to be controlled in a simple manner. Generally, the amount of deflection will be increased in response to an increasing velocity of the air stream, because the rotational velocity of the propeller tends to increase more the an proportionally, so that the apparent angle of attack is reduced. However, if the wind speed increases, the angle of attack initially becomes larger, until the rotational velocity of the propeller has increased proportionally. This may be compensated for by initially reducing the amount of deflection in response to an increasing air velocity. If the generator load is controlled such that the rotational velocity of the propeller is not increased or increased less than proportionally with air velocity, the apparent angle of attack increases with increasing wind velocity, so deflection of the air stream is preferably reduced in response to increasing wind velocity.

It is also possible to control the rotation inducer 13 to change the deflection of the airstream in the sense of rotation 5 of the propeller 2 in response to increasing rotational velocity of the propeller 2 and vice versa, since the speed of the air stream 6 determines the rotational velocity of the propeller 2 at a given load of the generator 7, 10. This obviates the need of a wind speed meter and avoids the associated risk of malfunction of the wind speed meter. The change will in principle be an increase in response to increasing rotational velocity of the propeller 2. However, if the generator load is controlled such that the rotational velocity of the propeller is increased less than proportionally with air velocity, the apparent angle of attack increases with increasing rotational velocity of the propeller (because the air velocity increases more than the rotational velocity of the propeller), so deflection of the air stream is then preferably reduced in response to increasing rotational velocity of the propeller.

However, if the rotation inducer 13 is controlled so as to adjust deflection of the airstream in the sense of rotation 5 of the propeller 2 in accordance with a quotient between rotational velocity of the propeller 2 and a measured velocity of the air stream 6, a particularly precise setting of the amount of deflection of the air stream can be achieved, in particular if the wind speed and/or the wind direction fluctuates much.

The control unit 16 may for instance be arranged for controlling the deflector blades 14 in accordance with measured rotor speed, wind speed and power delivery. The control unit 16 may also be arranged for controlling generator load for maintaining an optimum rotor speed at a measured wind speed. The control unit 16 may also be arranged for yaw control, to maintain alignment between the wind direction an the axis of rotation of the propeller.

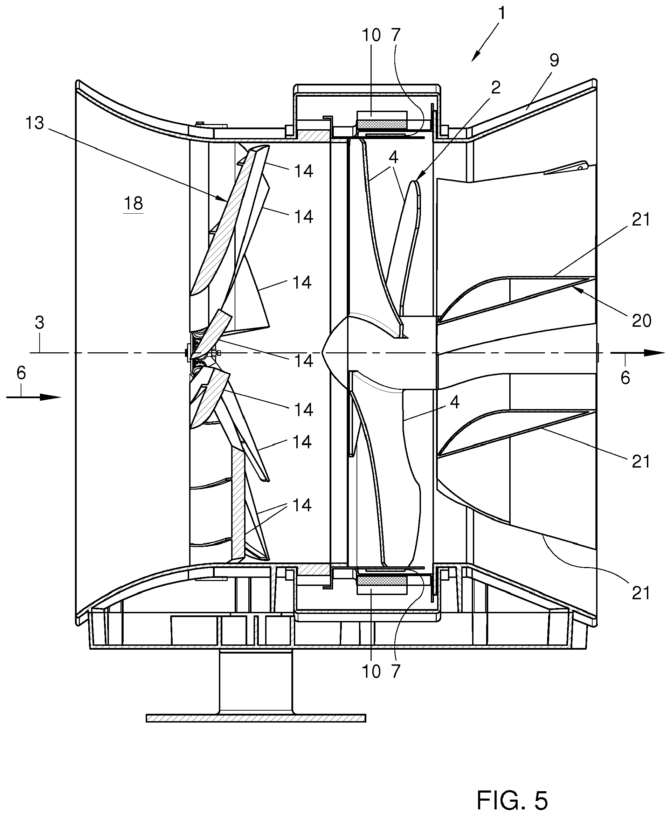

As is best seen in Fig. 5, in the wind turbine 1 according to the present example, the propeller 2 constitutes a rotor of the generator and a stationary stator of the generator is arranged for co-operation with the rotor, the rotor and the stator forming a co-operating power generating armature 10 and magnetic field component 7 of the generator. Thus, a low cost, high efficiency direct drive generator is provided.

A particular advantage of this construction is that a large speed difference between the rotor and stator parts is achieved and a small gap between the rotor and the stator can be maintained, which is advantageous for efficiency of power generation. Also, because the stator is integrated in the tunnel housing 9, it causes little drag. All the generator components that are electrically connected for transfer of electric current are stationary parts, which is advantageous for reliability and low maintenance need of the system. Other advantages of positioning the generating armature 10 around the propeller 2 are that a large number of small collectors can be provided, thereby reducing the tendency of locking, so that the turbine can operate more efficiently at lower wind speeds and the minimum wind speed required for the wind turbine to operate is reduced. These advantages can also be achieved if no rotation inducer is provided.

For increasing air stream velocity past the propeller 2, the housing sleeve 9 extending around the propeller 2 and coaxial with the axis of rotation 3 of the propeller 2 bounds a venturi shaped channel 18.

In the present example, the propeller is rotatably suspended relative to the housing sleeve 9 via a central bearing inside a hub 19 of the propeller 2 that is supported by an air guide 20 having air guides extending from the hub 19 to the sleeve 9 extending around the channel 18.

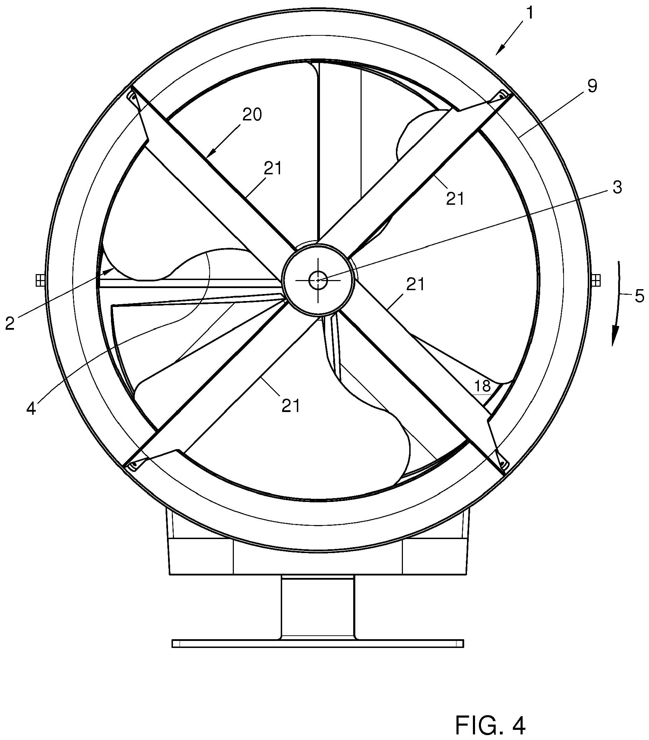

The airstream guide blades 21 (see Figs. 4-6) are circumferentially distributed about the axis of rotation 3 and stationary in circumferential sense about the axis of rotation 3. Upstream portions of the airstream guide blades 21 extend along generally helical paths corresponding to an average direction of the airstream leaving the propeller 2 and downstream portions of the airstream guide blades 21 extend in directions more parallel to the axis of rotation 3 than the upstream portions. The air guide 20 regularizes airflow streaming away from the propeller 2 and aligns it with airflow passing along the outside of the sleeve 9. Thus, turbulence behind the rotor is reduced and outflow blends in more easily with airflow that has passed along the outside of the sleeve 9. This improves efficiency of energy transfer to the propeller 2. Moreover, noise emissions are reduced.

## Claims

1. A wind turbine comprising:
a propeller rotatable about an axis of rotation, the propeller having a plurality of airfoil blades circumferentially distributed about the axis of rotation, wherein the blades are shaped for driving rotation of the propeller in a circumferential sense about the axis of rotation in response to airstream having a directional component in a direction parallel to the axis of rotation;
a generator structure for generating electric power in response to the rotation of the propeller; and
a rotation inducer upstream of the propeller for inducing a rotation in the airstream from the rotation inducer to the propeller;
wherein the rotation inducer is adjustable for adjusting rotation imparted onto the airstream in accordance with at least rotational velocity of the propeller, velocity of the airstream or amount of electric power generated by the generator structure.

2. A wind turbine according to claim 1, wherein the rotation inducer has a plurality of airstream deflector blades circumferentially distributed about the axis of rotation and stationary in circumferential sense about the axis of rotation.

3. A wind turbine according to claim 1 or 2, wherein each of the airstream deflector blades is pivotable about an axis transverse to the axis of rotation.

4. A wind turbine according to any of the preceding claims, wherein the rotation inducer is arranged for inducing rotation of the airstream in the sense of rotation of the propeller.

5. A wind turbine according to claim 4, wherein the rotation inducer is arranged for changing deflection of the airstream in the sense of rotation of the propeller in response to an increase or a decrease of velocity of the air stream.

6. A wind turbine according to claim 4 or 5, wherein the rotation inducer is arranged for changing deflection of the airstream in the sense of rotation of the propeller in response to an increase or a decrease of rotational velocity of the propeller.

7. A wind turbine according to any of the claims 4-6, wherein the rotation inducer is arranged for adjusting deflection of the airstream in the sense of rotation of the propeller in accordance with a quotient between rotational velocity of the propeller and velocity of the air stream.

8. A wind turbine according to any of the preceding claims, wherein the propeller constitutes a rotor of the generator and a stationary stator of the generator is arranged for co-operation with the rotor, the rotor and the stator forming a co-operating power generating armature and magnetic field component of the generator.

9. A wind turbine according to any of the preceding claims, wherein an air guide is arranged downstream of the propeller, the air guide comprising a plurality of airstream guide blades circumferentially distributed about the axis of rotation and stationary in circumferential sense about the axis of rotation, upstream portions of the airstream guide blades extending along generally helical paths corresponding to an average direction of the airstream leaving the propeller and downstream portions of the airstream guide blades extending in directions more parallel to the axis of rotation than the upstream portions.

10. A method of generating power from wind using a wind turbine, the wind turbine comprising:
a propeller rotatable about an axis of rotation, the propeller having a plurality of airfoil blades circumferentially distributed about the axis of rotation, wherein an airstream having a directional component in a direction parallel to the axis of rotation drives rotation of the propeller in a circumferential sense about the axis of rotation;
a generator structure generating electric power in response to the rotation of the propeller; and
a rotation inducer upstream of the propeller inducing a rotation in the airstream from the rotation inducer to the propeller;
wherein the rotation inducer is adjusted for adjusting rotation imparted onto the airstream in accordance with at least rotational velocity of the propeller, velocity of the airstream or amount of electric power generated by the generator structure.

11. A method according to claim 10, wherein the rotation inducer induces rotation of the airstream in the sense of rotation of the propeller.

12. A method according to claim 11, wherein the rotation inducer changes deflection of the airstream in the sense of rotation of the propeller in response to an increase or a decrease of velocity of the air stream.

13. A method according to claim 11 or 12, wherein the rotation inducer changes deflection of the airstream in the sense of rotation of the propeller in response to an increase or a decrease of rotational velocity of the propeller.

14. A method according to any of the claims 11-13, wherein the rotation inducer adjusts deflection of the airstream in the sense of rotation of the propeller in accordance with a quotient between rotational velocity of the propeller and velocity of the air stream.
